# EUROPÄISCHE PATENTANMELDUNG

(11) **EP 3 640 583 A1**
(43) Veröffentlichungstag der Anmeldung: **22.04.2020**
(21) Anmeldenummer: 18201476.1
(22) Anmeldetag: 19.10.2018
(51) Int. Cl.: G01B 11/24, G01B 5/008, G01B 21/04

(54) **VERFAHREN ZUR 3D-ERFASSUNG EINES MESSOBJEKTS**

(71) Anmelder: Carl Zeiss Optotechnik GmbH, 83115 Neubeuern (DE)
(72) Erfinder: Daxauer, Herbert, 6345 Kössen (AT); Roithmeier, Robert, 82418 Seehausen a. Staffelsee (DE)
(74) Vertreter: Behr, Wolfgang

(57) **Zusammenfassung**

Die vorliegende Anmeldung zeigt ein Verfahren zur 3D-Erfassung eines Messobjekts mittels eines optischen Sensors, bei welchem das Messobjekt durch den optischen Sensor erfasst wird, um 3D-Messdaten zu dem Messobjekt in einem Sensorkoordinatensystem zu erzeugen. Dabei ist vorgesehen, dass zur Referenzierung zwischen dem Sensorkoordinatensystem und einem Raumkoordinatensystem ein wiederholungsarmes Hintergrundmuster eingesetzt wird.

## Beschreibung

Die vorliegende Erfindung betrifft ein Verfahren zur 3D-Erfassung eines Messobjekts.

Aus der EP 2 788 714 B1 ist ein Verfahren zur 3D-Erfassung eines Messobjekts mittels eines Koordinatenmessgerätes bekannt, wobei das Koordinatenmessgerät einen Messkopf aufweist, welcher in einem Messbereich des Koordinatenmessgeräts verfahrbar ist, um ein Messobjekt zu erfassen. Das Messobjekt wird vor der Erfassung durch den Messkopf in dem Messbereich des Koordinatenmessgerätes angeordnet und die 3D-Daten des Messobjekts werden über einen optischen Sensor erfasst werden, um die Position des Messobjektes relativ zu dem Koordinatensystem des Koordinatenmessgerätes zu ermitteln. Um beide Seiten eines Messobjektes zu erfassen, können mehrere optische Sensoren eingesetzt werden. Die Kalibrierung der optischen Sensoren erfolgt über Referenzobjekte, welche auch zur Kalibrierung des Messkopfes herangezogen werden.

Aufgabe der vorliegenden Erfindung ist es, verbesserte Verfahren und Messvorrichtungen zur 3D-Erfassung eines Messobjekts zur Verfügung zu stellen.

Diese Aufgabe wird durch den Gegenstand der unabhängigen Ansprüche gelöst. Bevorzugte Ausgestaltungen der vorliegenden Erfindung sind Gegenstand der Unteransprüche.

Die vorliegende Erfindung umfasst in einem ersten Aspekt ein Verfahren zur 3D-Erfassung eines Messobjekts mittels eines optischen Sensors, bei welchem das Messobjekt durch den optischen Sensor erfasst wird, um 3D-Messdaten zu dem Messobjekt in einem Sensorkoordinatensystem zu erzeugen. Das Verfahren ist dadurch gekennzeichnet, dass zur Referenzierung zwischen dem Sensorkoordinatensystem und einem Raumkoordinatensystem ein wiederholungsarmes Hintergrundmuster eingesetzt wird.

Erfindungsgemäß wird daher der Hintergrund des Messobjektes so gewählt, dass dieser eine optisch eindeutig zu referenzierende Oberfläche mit einem wiederholungsarmen Muster aufweist. Das wiederholungsarme Muster wird dann zur Referenzierung des Sensorkoordinatensystems zu einem Raumkoordinatensystem eingesetzt.

Ein solches wiederholungsarmes Muster kann entweder anstelle der im Stand der Technik zur Referenzierung eingesetzten Referenzmarker und/oder Referenzobjekte eingesetzt werden, oder zusätzlich zu Referenzmarkern und/oder Referenzobjekten.

Das wiederholungsarme Hintergrundmuster besteht bevorzugt aus unregelmäßig geformten Bereichen unterschiedlicher Helligkeit und/oder Farbe, insbesondere aus unregelmäßig geformten hellen und dunklen Bereichen.

Bei dem wiederholungsarmen Muster handelt es sich bevorzugt um ein stochastisches Hintergrundmuster. Alternativ kann es sich jedoch auch um eine nichtstochastische wiederholungsarme Textur handeln, beispielsweise ein wiederholungsarmes Bild.

Bei dem wiederholungsarmen Muster handelt es sich bevorzugt um ein wiederholungsfreies Muster.

Die Referenzierung erfolgt bevorzugt durch Auswertung des wiederholungsarmen Hintergrundmusters mittels digitaler Bildkorrelation. Bevorzugt werden hierfür in zwei Aufnahmen mehrere gleiche Bildbereiche identifiziert und miteinander in Beziehung gesetzt. Als Aufnahmen im Sinne der vorliegenden Erfindung, deren Bildbereiche in Bezug gesetzt werden, können sowohl 2-dimensionale Bilder, wie sie unmittelbar durch eine Kamera erfasst werden, als auch 3-dimensionale Punktewolken, wie sie durch Auswertung der Sensordaten gewonnen werden, dienen.

In einer ersten Variante ist der optische Sensor während der 3D-Erfassung des Messobjekts ortsfest zum Messobjekt angeordnet. Hierdurch muss eine Referenzierung zwischen dem Sensorkoordinatensystem und einem Raumkoordinatensystem nur einmal erfolgen.

Alternativ oder zusätzlich wird das wiederholungsarme Hintergrundmuster für eine initiale Referenzierung zwischen dem Sensorkoordinatensystem und dem Raumkoordinatensystem herangezogen. Diese Referenzierung kann erfolgen, bevor das Messobjekt in den Messbereich verbracht wurde und/oder ohne dass gleichzeitig das Messobjekt erfasst wird.

In einer zweiten Variante wird der optische Sensor während der 3D-Erfassug des Messobjekts relativ zu dem Messobjekt bewegt. Dies kann zum einen erfolgen, um mehrere Aufnahmen des Messobjektes aus unterschiedlichen Positionen aufzunehmen. Hierdurch können auch komplexere Messobjekte erfasst werden. Weiterhin erfordern manche Sensortypen eine Relativbewegung zwischen Messobjekt und Sensor, um das Messobjekt zu erfassen, beispielsweise Laserscanner.

Alternativ oder zusätzlich wird das wiederholungsarme Hintergrundmuster zusammen mit dem Messobjekt aufgenommen, um für die jeweilige Aufnahme eine Referenzierung zwischen dem Sensorkoordinatensystem und dem Raumkoordinatensystem vorzunehmen. Das wiederholungsarme Hintergrundmuster dient daher dazu, um die in den einzelnen Sensorpositionen ermittelten 3D-Daten des Messobjektes in einem Koordinatensystem zusammenzuführen.

Das wiederholungsarme Hintergrundmuster kann so anstelle oder in Ergänzung von Referenzpunkten und/oder Referenzkulissen eingesetzt werden, um die von einem hand- oder robotergeführten optischen Sensor aus unterschiedlichen Positionen ermittelten 3D-Daten in einem globalen Koordinatensystem zusammenführen zu können.

In einer möglichen Ausführungsform der vorliegenden Erfindung handelt es sich bei dem wiederholungsarmen Hintergrundmuster um das Muster einer Basisplatte, auf welcher das Messobjekt zur Durchführung der Messung platziert wird. Hierdurch kann die ohnehin für die Messung notwendige Basisplatte auch zur Referenzierung genutzt werden.

In einer möglichen Ausführungsform der vorliegenden Erfindung handelt es sich bei dem wiederholungsarmen Hintergrundmuster um die natürliche Musterung eines Objektes aus Stein, insbesondere aus Naturstein. Insbesondere kann es sich um die natürliche Musterung einer Steinplatte, insbesondere einer Natursteinplatte handeln.

Steinobjekte, insbesondere Steinplatten aus Naturstein wie beispielsweise Granit weisen oftmals eine natürliche Musterung auf, welche erfindungsgemäß als ein wiederholungsarmes Muster und damit zur Referenzierung des Sensorkoordinatensystems relativ zum Steinobjekt, insbesondere zur Steinplatte eingesetzt werden kann.

Alternativ kann es sich bei dem Objekt, insbesondere bei der Steinplatte, auch um ein Objekt, insbesondere eine Platte aus Kunststein wie beispielsweise Beton handeln. Bei der Herstellung des Objekts, insbesondere der Steinplatte wird dieser bevorzugt mit Partikeln angereichert, welche eine andere Farbe als das Grundmaterial aufweisen und daher dem Objekt, insbesondere der Steinplatte eine Musterung geben. Als natürliche Musterung im Sinne der vorliegenden Erfindung wird daher auch eine Musterung eines Kunststeines betrachtet, welche bei dessen Herstellung entsteht, ohne dass sie in ihrer konkreten Ausprägung vorgegeben würde.

Weiterhin kann es sich bei dem wiederholungsarmen Hintergrundmuster um die Musterung eines aus unterschiedlich gefärbten Kunststoffen gefertigten Objektes, insbesondere einer Platte handeln. Auch hier kann eine natürliche Musterung im Sinne der vorliegenden Erfindung vorliegen, welche bei der Herstellung des Objektes und insbesondere der Platte entsteht, ohne dass die Musterung in ihrer konkreten Ausprägung vorgegeben würde.

Weiterhin kann das wiederholungsarme Hintergrundmuster auch durch Drucken hergestellt werden.

Wird die Musterung eines Objektes als wiederholungsarmes Hintergrundmuster eingesetzt, so ist die Oberfläche des Objektes bevorzugt behandelt, insbesondere poliert, um die Sichtbarkeit der Musterung zu erhöhen. Die Oberfläche kann auch gefräst und/oder geschliffen und/oder geätzt sein.

Alternativ oder zusätzlich zu einer natürlichen Musterung kann das wiederholungsarme Hintergrundmuster auch in die Oberfläche des Objektes, insbesondere einer Basisplatte eingebracht werden. Insbesondere können Vertiefungen in der Oberfläche des Objektes und insbesondere einer Basisplatte erzeugt und mit einem Material verfüllt werden, welches eine andere Farbe aufweist als das Material des Objektes, insbesondere der Basisplatte.

Weiterhin können zusätzlich zu einer natürlichen Musterung in die Oberfläche des Objektes, insbesondere einer Stein- oder Kunststoffplatte, Referenzpunkte eingebracht werden, welche dann zusätzlich zu der Musterung zur Referenzierung herangezogen werden.

In einer möglichen Ausführungsform der vorliegenden Erfindung wird das wiederholungsarme Hintergrundmuster vor der Durchführung der 3D-Erfassung bezüglich seiner Lage im Raumkoordinatensystem eingemessen. Bevorzugt erfolgt dies über einen optischen Sensor, insbesondere über den später auch zur 3D-Erfassung des Messobjektes herangezogenen optischen Sensor, oder über einen zweiten optischen Sensor.

In einer möglichen Ausführungsform der vorliegenden Erfindung werden die durch die 3D-Erfassung des Messobjektes erhaltenen 3D-Daten genutzt, um ein Werkstück zu prüfen, insbesondere um Fehler des Werkstückes zu erkennen.

Beispielsweise können die erhaltenen 3D-Daten mit Soll-Daten, beispielsweise aus einem CAD-Programm, verglichen werden.

In einer möglichen Ausführungsform der vorliegenden Erfindung wird ein Messgerät eingesetzt, bei welchem die Position des optischen Sensors über ein Trackingsystem getrackt wird, um die einzelnen Aufnahmen des optischen Sensors zu einem globalen Koordinatensystem zu referenzieren.

Bevorzugt wird das wiederholungsarme Hintergrundmuster in diesem Fall als Referenz zum Umsetzen des Trackingsystems genutzt. Hierfür wird das wiederholungsarme Hintergrundmuster oder Teile des wiederholungsarmen Hintergrundmusters vor und nach dem Umsetzen des Trackingsystems durch den optischen Sensor erfasst und hierdurch die jeweiligen durch die Position des Trackingsystem definierten globalen Koordinatensysteme miteinander in Beziehung gesetzt. Werden hierbei vor und nach dem Umsetzen des Trackingsystems unterschiedliche Teile des wiederholungsarmen Hintergrundmusters erfasst, muss dieses vorab eingemessen werden.

In einer möglichen Ausführungsform der vorliegenden Erfindung wird die 3D-Erfassung des Messobjektes genutzt

In einer möglichen Ausführungsform der vorliegenden Erfindung wird die 3D-Erfassung des Messobjektes genutzt, um einen darauffolgenden Messprozess anzusteuern.

Insbesondere kann die 3D-Erfassung des Messobjektes genutzt werden, um den Messkopf eines Koordinatenmessgeräts anzusteuern. Insbesondere kann der Messkopf auf Grundlage der 3D-Erfassung des Messobjektes automatisiert das Messobjekt abfahren, um dieses nochmals genauer zu erfassen.

In einem zweiten Aspekt der vorliegenden Erfindung umfasst diese ein Verfahren zur 3D-Erfassung eines Messobjekts mittels eines Koordinatenmessgerätes, wobei das Koordinatenmessgerät einen Messkopf aufweist, welcher in einem Messbereich des Koordinatenmessgeräts verfahrbar ist, um ein Messobjekt zu erfassen. Dabei wird ein Messobjekt vor der Erfassung durch den Messkopf in dem Messbereich des Koordinatenmessgerätes angeordnet und die 3D-Daten des Messobjekts über einen optischen Sensor erfasst werden, um die Position des Messobjektes relativ zu dem Koordinatensystem des Koordinatenmessgerätes zu ermitteln. Erfindungsgemäß ist vorgesehen, dass der optische Sensor relativ zu dem Messobjekt bewegt wird, um mehrere Aufnahmen des Messobjektes aus unterschiedlichen Positionen aufzunehmen.

In einer möglichen Ausgestaltung des zweiten Aspektes werden ein an dem Koordinatenmessgerät angeordnetes Referenzmuster und/oder an dem Koordinatenmessgerät angeordnete Referenzobjekte zusammen mit dem Messobjekt aufgenommen, um für die jeweilige Aufnahme eine Referenzierung zwischen dem Sensorkoordinatensystem und dem Koordinatensystem des Koordinatenmessgerätes vorzunehmen.

Insbesondere kann ein Muster einer Basisplatte des Koordinatenmessgerätes als Referenzmuster eingesetzt werden.

Der erste und der zweite Aspekt sind jeweils unabhängig voneinander Gegenstand der vorliegenden Erfindung.

So kann das wiederholungsarme Hintergrundmuster gemäß dem ersten Aspekt beispielsweise auch dann eingesetzt werden, wenn der optische Sensor in einer festen Position relativ zum Koordinatenmessgerät eingesetzt wird, oder überhaupt nicht mit einem Koordinatenmessgerät kombiniert wird.

Weiterhin kann ein mobiler optischer Sensor gemäß dem zweiten Aspekt auch dann eingesetzt werden, wenn zur Referenzierung kein wiederholungsarmes Hintergrundmuster eingesetzt wird, sondern beispielsweise ein Muster aus Referenzmarkern und/oder Referenzobjekte.

Bevorzugt werden die beiden Aspekte der vorliegenden Erfindung jedoch miteinander kombiniert. Insbesondere wird daher zur Referenzierung der durch den mobilen optischen Sensor gemäß dem zweiten Aspekt aufgenommenen Bilder in das Koordinatensystem des Koordinatenmessgerät ein wiederholungsarmes Hintergrundmuster gemäß dem ersten Aspekt eingesetzt. Bevorzugt ist das wiederholungsarme Muster dabei auf einer Basisplatte des Koordinatenmessgeräts angeordnet, und wird insbesondere durch die natürliche Musterung einer als Basisplatte eingesetzten Steinplatte gebildet.

Bevorzugte Ausgestaltungen sowohl des ersten als auch des zweiten Aspektes werden im folgenden näher erläutert.

In einer möglichen Ausgestaltung der vorliegenden Erfindung handelt es sich bei dem optischen Sensor um einen handgeführten Sensor. Alternativ kann, wird ein beweglicher Sensor eingesetzt, der optische Sensor aber auch durch einen Roboterarm bewegt werden.

In einer möglichen Ausgestaltung der vorliegenden Erfindung umfasst der optische Sensor mindestens einen Projektor und mindestens eine Kamera. Der Projektor projiziert bevorzugt ein eindimensionales oder zweidimensionales Bild, insbesondere ein eindimensionales oder zweidimensionales Muster. Als Projektor im Sinne der vorliegenden Erfindung wird daher auch die Lichtquelle eines Laserscanners verstanden, bei welcher bspw. eine aufgeweitete Laserlinie projiziert wird.

In einer möglichen Ausgestaltung umfasst der Sensor mindestens zwei Kameras.

Insbesondere können die Bilder der beiden Kameras durch digitale Bildkorrelation ausgewertet werden, um durch eine Korrelation des in beiden Bildern enthaltenen wiederholungsarmen Hintergrundmusters eine Referenzierung vorzunehmen.

Alternativ kann auch nur eine Kamera eingesetzt werden. In diesem Fall erfolgt die Korrelation des wiederholungsarmen Hintergrundmusters auf einer Aufnahme bevorzugt mit einer Aufnahme, welche auf Grundlage einer initial vorgenommenen Erfassung erstellt wurde.

In einer möglichen Ausgestaltung der vorliegenden Erfindung umfasst das Koordinatenmessgerät einen Messkopf, welcher im Messbereich des Koordinatenmessgeräts verfahrbar ist, um das Messobjekt zu erfassen.

Bevorzugt wird die 3D-Erfassung durch den optischen Sensor gemäß der vorliegenden Erfindung dazu eingesetzt, um die Bewegung des Messkopfes bei einer darauffolgenden, bevorzugt automatisierten Erfassung des Messobjektes durch den Messkopf anzusteuern.

Bei dem Messkopf kann es sich um einen taktilen und/oder optischen Messkopf handeln.

Der Messkopf ist bevorzugt mit einem zweiten optischen Sensor ausgestattet oder ausstattbar.

Der zweite optische Sensor wird gemäß einer möglichen Ausgestaltung der vorliegenden Erfindung dazu genutzt, um ein am Koordinatenmessgerät angeordnetes Referenzmuster bezüglich seiner Lage im Koordinatensystem des Koordinatenmessgerätes einzumessen. Insbesondere kann hierdurch ein wiederholungsarmes Hintergrundmuster durch den zweiten optischen Sensor eingemessen werden.

Der zweite optische Sensor ist in einer möglichen Ausgestaltung der vorliegenden Erfindung lösbar mit dem Messarm des Koordinatenmessgerätes verbindbar. Der zweite optische Sensor kann beispielsweise werksseitig und/oder bei Wartungsarbeiten eingesetzt werden, um das wiederholungsarme Hintergrundmuster einzumessen, und verbleibt im laufenden Betrieb daher nicht am Koordinatenmessgerät. In einer möglichen Ausgestaltung der vorliegenden Erfindung umfasst der Träger des wiederholungsarmen Hintergrundmusters, bei welchem es sich insbesondere um eine Platte handeln kann, einen oder mehrere taktil erfassbare Referenzpunkte, bspw. in Form von Bohrungen. Diese taktil erfassbaren Referenzpunkte werden dann im laufenden Betrieb zur Kalibrierung und insbesondere zum Einmessen der Position des wiederholungsarmen Hintergrundmusters im Koordinatensystem des Koordinatenmessgerätes eingesetzt, indem sie über einen taktilen Sensor des Koordinatenmessgerätes angetastet werden.

Der erste optische Sensor weist bevorzugt ein größeres Messvolumen auf als der zweite optische Sensor. Der erste optische Sensor kann hierdurch zur Erst-Erfassung der Lage eines Werkstückes im Maschinenkoordinatensystem des Koordinatenmessgerätes eingesetzt werden. Bevorzugt kann der zweite optische Sensor weiterhin zur Erfassung von Details des Messobjektes durch das Koordinatenmessgerät herangezogen werden.

Die vorliegende Erfindung umfasst gemäß dem ersten Aspekt weiterhin ein Messgerät mit einem optischen Sensor zur 3D-Erfassung eines Messobjekts, mit einem wiederholungsarmen Hintergrundmuster und mit einer Auswerteeinheit, welche das wiederholungsarme Hintergrundmuster zur Referenzierung zwischen einem Sensorkoordinatensystem und einem Raumkoordinatensystem nutzt. Insbesondere kann das Hintergrundmuster auf einem Element des Messgerätes angeordnet sein, vor oder auf welchem das Messobjekt angeordnet wird, um erfassen zu werden.

Insbesondere kann es sich bei dem wiederholungsarmen Hintergrundmuster um das Muster einer Basisplatte handeln, auf welcher das Messobjekt zur Durchführung der Messung platziert wird.

In einer möglichen Ausgestaltung der vorliegenden Erfindung handelt es sich bei dem wiederholungsarmen Hintergrundmuster um die natürliche Musterung einer Steinplatte, insbesondere einer Natur- und/oder Kunststeinplatte. Weiterhin kann es sich bei dem wiederholungsarmen Hintergrundmuster um die Musterung einer aus unterschiedlich gefärbten Kunststoffen gefertigten Platte handeln. Auch hier kann eine natürliche Musterung im Sinne der vorliegenden Erfindung vorliegen, welche bei der Herstellung der Platte entsteht, ohne dass die Musterung in ihrer konkreten Ausprägung vorgegeben würde. Weiterhin kann das wiederholungsarme Hintergrundmuster auch durch Drucken hergestellt werden. Bevorzugt wird die das wiederholungsarme Hintergrundmuster tragende Platte als Basisplatte der Messvorrichtung eingesetzt.

Die vorliegende Erfindung umfasst gemäß dem zweiten Aspekt weiterhin ein Messgerät, wobei das Messgerät einen Messkopf aufweist, welcher in einem Messbereich des Messgeräts verfahrbar ist, um ein Messobjekt zu erfassen, und wobei das Messgerät weiterhin einen optischen Sensor und eine Auswerteeinheit aufweist, durch welche die 3D-Daten eines in dem Messbereich des Messgerätes angeordneten Messobjekts vor der Erfassung durch den Messkopf erfasst werden können, um die Position des Messobjektes relativ zu dem Koordinatensystem des Messgerätes zu ermitteln. Erfindungsgemäß ist das Messgerät dadurch gekennzeichnet, dass der optische Sensor relativ zu dem Messobjekt bewegbar ist, um mehrere Aufnahmen des Messobjektes aus unterschiedlichen Positionen aufzunehmen.

Insbesondere handelt es sich bei dem Messgerät um ein Koordinatenmessgerät.

Die Messgeräte gemäß dem ersten und dem zweiten Aspekt sind jeweils unabhängig Gegenstand der vorliegenden Erfindung. Bevorzugt kommen die Merkmale gemäß dem ersten und dem zweiten Aspekt jedoch in Kombination bei einem Messgerät zum Einsatz.

In einer möglichen Ausgestaltung der vorliegenden Erfindung handelt es sich bei dem optischen Sensor um einen handgeführten oder einen durch einen Roboterarm geführten Sensor.

In einer möglichen Ausgestaltung der vorliegenden Erfindung umfasst der optische Sensor mindestens einen Projektor und mindestens eine Kamera.

Die erfindungsgemäßen Messgeräte sind zunächst unabhängig von den oben beschriebenen Verfahren Gegenstand der vorliegenden Erfindung.

Bevorzugt sind die Messgeräte jedoch so ausgestaltet, wie dies oben im Hinblick auf die erfindungsgemäßen Verfahren näher beschrieben wurde. Insbesondere sind die Messgeräte und insbesondere die Auswerteeinheit zur Durchführung eines der erfindungsgemäßen Verfahren eingerichtet.

Bevorzugt erfolgt bei der Durchführung eines erfindungsgemäßen Verfahrens durch ein erfindungsgemäßes Messgerät die Auswertung der Sensordaten durch die Auswerteeinheit automatisiert.

Die vorliegende Erfindung wird nun anhand von Ausführungsbeispielen und Zeichnungen näher beschrieben.

Dabei zeigen:
- Fig. 1: ein erstes Ausführungsbeispiel einer erfindungsgemäßen Messvorrichtung zur Durchführung eines erfindungsgemäßen Verfahrens, bei welchen der erste und der zweite Aspekt in Kombination zum Einsatz kommen, und
- Fig. 2: ein Ausführungsbeispiel für ein wiederholungsarmes Hintergrundmuster gemäß dem ersten Aspekt der vorliegenden Erfindung und
- Fig. 3: ein zweites Ausführungsbeispiel einer erfindungsgemäßen Messvorrichtung zur Durchführung eines erfindungsgemäßen Verfahrens.

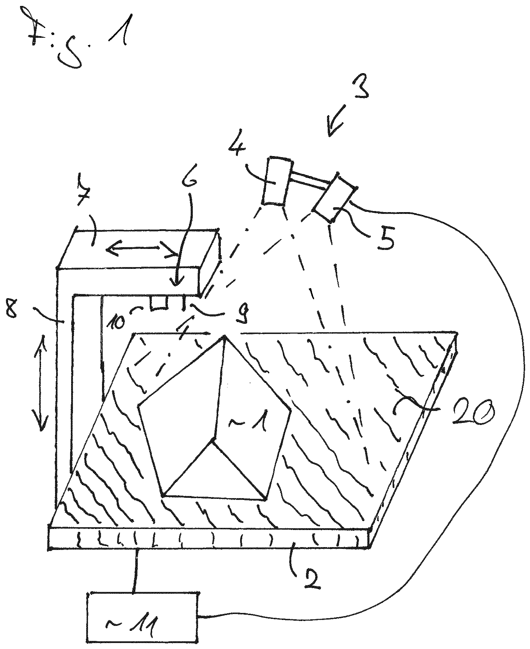

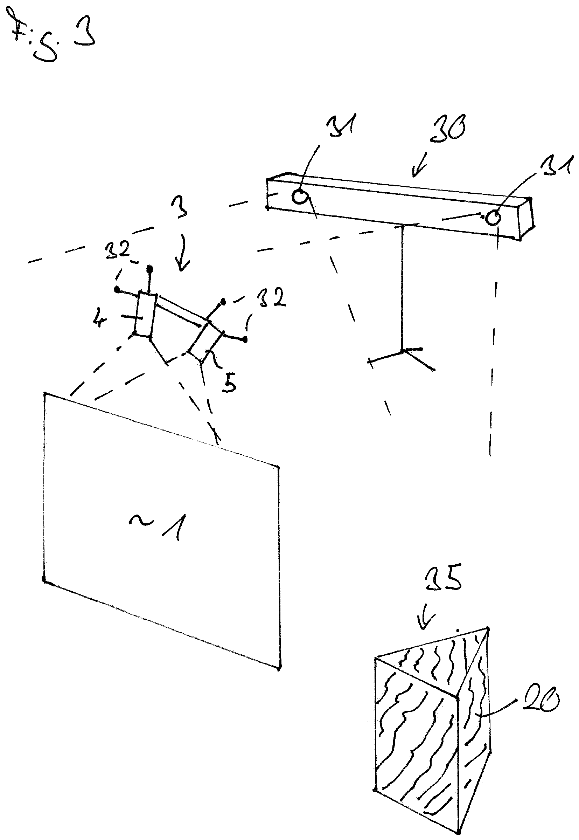

Fig. 1 zeigt ein erstes Ausführungsbeispiel einer erfindungsgemäßen Messvorrichtung zur Durchführung eines erfindungsgemäßen Verfahrens, bei welchen der erste und der zweite Aspekt in Kombination zum Einsatz kommen. Die anhand des Ausführungsbeispiels beschriebenen Merkmale der beiden Aspekte können jedoch auch gentrennt voneinander zum Einsatz kommen. Fig. 3 zeigt ein zweites Ausführungsbeispiel, bei welchem der erste Aspekt der vorliegenden Erfindung verwirklicht ist.

Die in Fig. 1 und 3 gezeigten Messvorrichtungen umfassen jeweils einen optischen Sensor 3 zur Erfassung der 3D-Daten des Messobjekts 1. Der optisches Sensor umfasst im Ausführungsbeispiel mindestens einen Projektor 4 und mindestens eine Kamera 5 zur Aufnahme des durch den Projektor 4 auf das Messobjekt 1 projizierten Lichtes. Der optische Sensor erfasst die 3D-Koordinaten des Messobjektes zunächst in seinem Sensorkoordinatensystem. Mögliche Ausgestaltungen des optischen Sensors 3 werden im folgenden noch näher beschrieben.

Gemäß dem ersten Aspekt ist im Messvolumen der Messvorrichtung ein wiederholungsarmes Muster 20 angeordnet, welches zur Referenzierung eingesetzt wird.

In Fig. 1 ist das Messobjekt auf einer Basisplatte 2 angeordnet, welche ein wiederholungsarmes Muster 20 aufweist. Dieses Muster wird von dem optischen Sensor 3 erfasst und zur Referenzierung der im Sensorkoordinatensystem erfassten 3D-Daten des Messobjektes zu einem globalen Koordinatensystem des Messgerätes herangezogen. Das Messobjekt wird zur 3D-Erfassung durch den Sensor 3 auf oder vor der Basisplatte angeordnet.

In Fig. 3 ist das wiederholungsarme Muster 20 auf einem Referenzobjekt vorgesehen, welches zusammen mit dem Messobjekt im Messvolumen der Messvorrichtung angeordnet ist und der Referenzierung des Sensorkoordinatensystems mit einem globalen Koordinatensystem dient.

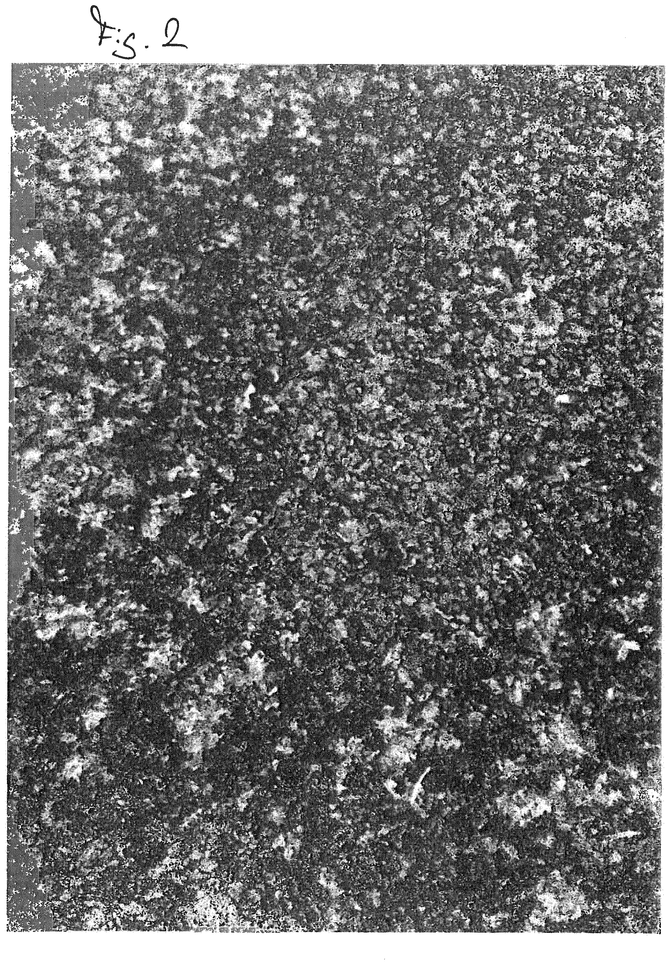

Bei dem wiederholungsarmen Muster kann es sich um die Musterung eines Objektes aus Naturstein handeln, insbesondere um die Musterung einer als Basisplatte eingesetzten Natursteinplatte. Eine solche Musterung ist in Fig. 2 für eine Granitplatte gezeigt.

Das Muster kann auch künstlich erzeugt werden. Entscheidend ist, dass das wiederholungsarme Hintergrundmuster optisch eindeutig referenzierbar, d.h. wiederholungsarm bzw. wiederholungsfrei ist.

Bevorzugt wird das wiederholungsarme Hintergrundmuster einmalig z.B. mit Hilfe eines optischen Sensorsystems bekannter Position und Richtung eingemessen, also in den Raumkoordinaten bekannt gemacht. Daraufhin kann:
- ein Messobjekt vor das wiederholungsarme Hintergrundmuster platziert und das Werkstückkoordinatensystem zum Raumkoordinatensystem referenziert werden;
- der optische Sensor 3 beliebig im Raum platziert werden und dessen Sensorkoordinatensystem zum Raumkoordinatensystem (und damit auch zum Werkstückkoordinatensystem) referenziert werden.

Auf die initiale Einmessung des wiederholungsarmen Hintergrundmusters kann für manche Anwendungen jedoch auch verzichtet werden. In diesem Fall bedarf es jedoch einer Überlappung zwischen den durch den optischen Sensor 3 aufgenommenen Bildern, um diese mittels des wiederholungsarmen Hintergrundmusters in einem globalen Koordinatensystem zu referenzieren.

Bei dem in Fig. 1 gezeigten Ausführungsbeispiel handelt es sich bei der Messvorrichtung um ein Koordinatenmessgerät (KMG), welches neben dem optischen Sensor 3 weiterhin einen Messkopf 6 umfasst, welcher über Bewegungsachsen der Messvorrichtung relativ zum Messobjekt bewegbar ist, um dieses in einem Messvolumen des Messgerätes zu erfassen. Insbesondere sind dabei mehrere Linearachsen zur Bewegung des Messkopfes vorgesehen. Im Ausführungsbeispiel sind hierfür ein horizontaler Arm 7 und ein vertikaler Arm 8 vorgesehen, über welche der Messkopf verfahrbar ist. Bei dem Koordinatenmessgerät kann es sich beispielsweise um ein Portal- oder Horizontalarmmessgerät handeln.

Der Messkopf weist im Ausführungsbeispiel einen mechanischen Taster 9 zur taktilen Erfassung des Messobjektes 1 vor, und/oder einen zweiten optischen Sensor 10 zur Erfassung von Teilbereichen des Messobjektes.

Der optische Sensor 3 wird zur Vorausrichtung des Messobjektes relativ zu dem Koordinatensystem des Koordinatenmessgerätes eingesetzt.

Gemäß dem zweiten Aspekt der vorliegenden Erfindung ist der (erste) optische Sensor 3 relativ zum Messobjekt beweglich, um das Messobjekt aus mehreren Perspektiven zu erfassen. Insbesondere kann es sich um einen handgeführten Sensor handeln. Die von dem (ersten) optischen Sensor erfassten 3D-Daten werden bevorzugt zur Ansteuerung des Messkopfes bzw. der zu dessen Bewegung eingesetzten Bewegungsachsen des Messkopfes eingesetzt.

Die Auswertung der Sensordaten und/oder Ansteuerung des Messgerätes erfolgt durch die Steuerung 11 des Messgerätes.

Weitere Merkmale eines Messgerätes gemäß der vorliegenden Erfindung werden im folgenden näher dargestellt:
Bei Messungen mit einem Koordinatenmessgerät (KMG) gemäß der vorliegenden Erfindung wird das Werkstück auf dem Messtisch positioniert und die Lage des Werkstückes im Maschinenkoordinatensystem durch den optischen Sensor 3 ermittelt (Vorausrichtung), um in weiterer Folge automatisiert die auszuwertenden Merkmale des Prüfplans im Bauteilkoordinatensystem anzutasten. Die Vorausrichtung und automatisierte Erfassung von Merkmalen erfolgt mit einer rechnergestützten Inspektionssoftware.

Damit werden die Werkstücke mit eventuell vorhandenen Störkonturen, z.B. durch Aufspannhilfen und/oder der Auflagefläche etc., flächig erfasst, ohne dass die Lage des Werkstückes zuvor wie im Stand der Technik durch manuelle Abtastung erfasst worden wäre. Da das bekannte Muster und oder Punktewolke im KMG Koordinatensystem und das Muster und oder die Punktewolke der neuen Situation mit Werkstück etc. bekannt ist, können diese über bekannte rechnergestützte Ausrichtverfahren ausgerichtet werden.

Bevorzugt erhält die Auswertesoftware folgende Daten:
- Die Position des Werkstückes auf dem KMG, ohne dass vorher das Werkstück manuell angetastet werden muss.
- Alle Störkonturen, um diese in dem Ablauf der automatisierten Antastung zu berücksichtigen, um entsprechende Kollisionen zu vermeiden und den Weg zwischen den Merkmalen zu reduzieren.

Bevorzugt umfasst die Auswertesoftware eine oder mehrere der folgenden Funktionen:
- Eine Funktion, welche den richtigen Prüfplan für das Werkstück automatisiert anhand der Daten des optischen Sensors erkennt.
- Eine Funktion zur manuellen Auswahl des Prüfplans, welche eine Funktion zur Kontrolle der Plausibilität des Prüfplans anhand der Daten des optischen Sensors umfasst.
- Bei Verwendung von Spannern, um das Bauteil zu fixieren, eine Funktion, um den Zustand offen oder geschlossen anhand der Daten des optischen Sensors zur kontrollieren.
- Eine Funktion, um anhand der Daten des optischen Sensors die Lage des Werkstückes zu überprüfen, da durch die Verwendung von langen Tastern dies zu ebenso zu Kollisionen führen kann.
- Eine Anzeige, durch welchem einem Bediener die korrekte Positionierung des Messobjektes innerhalb des Messvolumens angezeigt wird.

Die vorliegende Erfindung ist jedoch nicht auf den Einsatz mit einem taktilen KMG eingeschränkt.

Beispielsweise kann die vorliegende Erfindung und insbesondere das wiederholungsarme Hintergrundmuster ganz allgemein als Referenz bei der optischen 3D-Erfassung von Werkstücken eingesetzt werden.

Sämtliche Aspekte, welche in der vorliegenden Anmeldung im Hinblick auf das wiederholungsarme Hintergrundmuster und die optische 3D-Erfassung des Messobjektes im Rahmen des ersten Ausführungsbeispiels in Fig. 1 beschrieben sind, können daher auch unabhängig von der Ausgestaltung als KMG und insbesondere unabhängig von dem Vorhandensein eines zusätzlich zum optischen Sensor vorhandenen Messkopfes zur 3D-Erfassung eines Messobjekts eingesetzt werden.

In Fig. 3 ist eine weitere Einsatzmöglichkeit eines wiederholungsarmen Hintergrundmusters als Referenz bei der 3D-Erfassung gezeigt.

Das in Fig. 3 gezeigte Messgerät umfasst ein Trackingsystem 30, durch welches die Position des optischen Sensors 3 erfasst werden kann. Hierdurch können von dem optischen Sensor 3 an unterschiedlichen Positionen erfasste Daten in ein globales Koordinatensystem überführt werden. Der optische Sensor 3 kann beispielswese handgeführt sein oder durch einen Roboter bewegt werden.

Das Trackingsystem 30 kann Sensoren 31 aufweisen, durch welche Referenzobjekte 32, welche am optischen Sensor 3 angeordnet sind, erfasst werden. Das Trackingsystem 30 kann deren Position beispielsweise durch Photogrammetrie bestimmen.

Manche Messobjekte 1 können jedoch nicht komplett durch ein solches Messgerät erfasst werden, ohne das Trackingsystem 30 umzusetzen. Dies ist insbesondere bei Messobjekten der Fall, welche zur Erfassung gewisser Bereiche eine Position des optischen Sensors 3 erfordern, in welcher dieser nicht mehr durch das Trackingsystem erfasst wird, weil das Messobjekt diesen Bereich verschattet. Dies wäre bei dem in Fig. 3 dargestellten großen flächigen Messobjekt 1 die dem Betrachter zugewandte Seite des Messobjektes.

Erfindungsgemäß wird daher ein Referenzobjekt 35 mit dem wiederholungsarmen Hintergrundmuster 20 zusammen mit dem Messobjekt 1 so im Messvolumen des Messgerätes platziert, dass das Referenzobjekt 35 sowohl vor als auch nach dem Umsetzen des Trackingsystems 30 durch den optischen Sensor 3 erfasst werden kann. Hierdurch können die jeweils durch die Position des Trackingsystems 30 definierten globalen Koordinatensysteme miteinander in Beziehung gesetzt werden.

Ist der gleiche Bereich des Referenzobjekts 35 bzw. des wiederholungsarmen Hintergrundmusters 20 sowohl vor als auch nach dem Umsetzen des Trackingsystems 30 durch den optischen Sensor 3 erfassbar, bedarf es hierfür keiner vorherigen Kenntnis des wiederholungsarmen Hintergrundmusters 20. Ansonsten muss das wiederholungsarme Hintergrundmuster 20 des Referenzobjektes 35 initial erfasst werden.

Als Referenzobjekt 35 kann beispielsweise ein Natursteinblock eingesetzt werden.

Merkmale der vorliegenden Erfindung, welche soweit nichts anderes angegeben ist, bei allen Ausgestaltungen der vorliegenden Erfindung einsetzbar sind, werden im folgenden näher beschrieben:
Die Auswertung des wiederholungsarmen Hintergrundmusters erfolgt bevorzugt durch digitale Bildkorrelation. Bei der Korrelation des wiederholungsarmen Musters werden bevorzugt in den jeweiligen Bildern mehrfach gleiche Bildbereiche mit z.B. 10x10 Pixeln gesucht. Wird ein solcher Bereich gefunden, wird über den Schwerpunkt trianguliert. Bei der Auswertung von Referenzmarkern wird dagegen im Bild eine Ellipse gesucht und deren Mittelpunkt ausgewertet.

Die Bilder können in einer ersten Ausgestaltung jeweils mit zwei zueinander kalibrierten Kameras zeitgleich erfasst werden. Der optische Sensor 3 weist daher bevorzugt zwei Kameras auf, welche weiter bevorzugt zeitgleich Paare von Bildern aufnehmen.

Alternativ kann die digitale Bildkorrelation auf Grundlage von zu unterschiedlichen Zeitpunkten und/oder aus unterschiedlichen Positionen aufgenommenen Aufnahmen erfolgen. Als Aufnahme oder Bild im Sinne der vorliegenden Erfindung werden dabei auch auf Grundlage der Sensorsignale ermittelte 3D-Daten aufgefasst.

Das im Ausführungsbeispiel eingesetzte Referenzmuster bzw. wiederholungsarme Hintergrundmuster wird bevorzugt initial eingemessen, also mit dem Koordinatensystem der Messvorrichtung referenziert. Hierfür kann der Messkopf der Messvorrichtung herangezogen werden.

Insbesondere kann ein optischer Sensor genutzt werden, welcher an dem Messarm des Messgerätes angeordnet ist. Dieser kann weiterhin dazu eingesetzt werden, um die durch den Taster erzeugten Informationen zu ergänzen, beispielsweise um Bohrungsdurchmesser zu bestimmen. Der optische Sensor, welche mit dem Messarm verfahren wird, weist bevorzugt einen kleineren Messbereich auf als der optische Sensor 3, da er leicht ausgeführt werden muss, um am Messarm angeordnet zu werden. Er ist daher nicht dazu geeignet, das gesamte Objekt zum Vorausrichten in der KMG zu erfassen, sondern benötigt bereits Informationen zur Vorausrichtung des Messobjektes. Er kann aber zur initialen Erfassung des Musters der Basisplatte eingesetzt werden.

Zur initialen Erfassung des Musters der Basisplatte und/oder zur 3D-Erfassung eines Messobjektes, bei welcher das wiederholungsarme Hintergrundmuster als Referenz eingesetzt wird, sind folgende Sensorsysteme denkbar:
1. Erfassung des Musters im KMG Koordinatensystem über Kamera und/oder Tastsystem
   Zur Erfassung des Musters kann eine Kamera 10 in Verbindung mit einem Taster 9 verwendet werden. Die Kamera 10 erfasst das Muster der Platte 2 im 2D Bildkoordinatensystem der Kamera, die zusätzlich benötigte Tiefe kann mit einem Taster 9 ermittelt werden. Die beiden Ergebnisse können dann miteinander Kombiniert werden. Das erfasste Muster hat somit eine bekannte Lage im Koordinatensystem der KMG.
   Kamera und Taster werden bevorzugt über entsprechende Normale zueinander kalibriert und arbeiten somit im gleichen Koordinatensystem.
2. Erfassung des Musters im KMG Koordinatensystem über einen Laserscanner
   Zur Erfassung des Musters kann ein Laserscanners verwendet werden, beispielsweise ein Linienscanner. Der Laserscanner wird anstelle oder zusätzlich zu dem Taster an dem Messkopf montiert und kann analog zum Tastsystem bewegt werden.
   Der Laserscanner erzeugt mittels Lichtschnittverfahren, z.B. mit einem zu einer Linie aufgeweiteten Laserstrahl und einer Kamera, durch Triangulation eine 2D-Kontur. Durch die Bewegungsachsen wird der Laserscanner über die Basisplatte 2 geführt, wobei aus der erfassten 2D-Kontur und der Bewegung des Messkopfes eine 3D-Kontur ermittelt wird. Durch das Bewegen des Messkopfes und der Synchronisation der Maschinenposition mit dem Laserscanner können die einzelnen 2D Schnitte zu einer 3D Punktewolke zusammengefügt werden.
   Die Belichtungszeit und/oder Blende und/oder Empfindlichkeit der Kamera wird so gewählt, dass jeweils nur helle oder dunkle Bereiche der Oberfläche aufgenommen werden. Damit erhält man eine Punktewolke der Oberfläche, welche durch Ihre ortsabhängige Punktedichte ein virtuelles Zufallsmuster im KMG Koordinatensystem darstellt.
   Laserscanner und Taster werden über entsprechende Normale zueinander kalibriert und arbeiten somit im gleichen Koordinatensystem.
3. Erfassung des Musters im KMG Koordinatensystem mittels eines 3D Flächenscanners
   Zur Erfassung des Musters kann ein 3D-Flächsenscanners verwendet werden, welcher beispielsweise mit Streifenprojektion arbeitet. Der 3D-Flächensensor wird anstelle oder zusätzlich zu dem Tasters an dem Messkopf montiert und kann analog zum Tastsystem bewegt werden.
   Das Prinzip unterscheidet sich zu Punk 2 darin, dass der Sensor anstelle einer 2D Kontur eine flächige 3D Punktewolke für jede mit der KMG angefahrene Position erfassen kann. Die nacheinander aufgenommen Punktewolken ergeben dann das Muster.
   Die Belichtungszeit und/oder Blende und/oder Empfindlichkeit der Kamera wird so gewählt, dass jeweils nur helle oder dunkle Bereiche der Oberfläche aufgenommen werden. Damit erhält man eine Punktewolke der Oberfläche, welche durch Ihre ortsabhängige Punktedichte ein virtuelles Zufallsmuster im KMG Koordinatensystem darstellt.
   Der 3D-Flächsenscanner und der Taster werden über entsprechende Normale zueinander kalibriert und arbeiten somit im gleichen Koordinatensystem.

Der optische Sensor 3 dient zum einen zum Erfassen des zu messenden Objektes mittels eines 3D-Digitalisiersystems, und zum anderen zum Erfassen des Musters als Referenz für die 3d Digitalisierung. Hierfür können alle Sensoren eingesetzt werden, welche 3D Punktewolken erfassen können und in der Lage sind, zwischen Bereichen unterschiedlicher Helligkeit und/oder Farbe, insbesondere hellen und dunklen Bereichen zu unterscheiden. Die 3D-Erfassung des zu messenden Objektes kann durch eine einzige Messung oder eine Folge von Messungen erfolgen. In mindestens einer Messung wird sowohl das zu messende Objekt als auch das Muster zumindest teilweise erfasst.

Hier kann beispielsweise eines der folgenden Verfahren der 3D-Digitalisierung zum Einsatz kommen:
1. Laserscanner
   Der Laserscanner erzeugt mittels Lichtschnittverfahren, z.B. mit einem zu einer Linie aufgeweiteten Laserstrahl und einer Kamera, durch Triangulation eine 2D-Kontur. Durch die Bewegung des Laserscanner wird der Laserstrahl über das Messobjekt geführt und die einzelnen 2D Schnitte zu einer 3D Punktewolke zusammengefügt.
2. 3D-Flächensensor
   Ein 3D-Flächensensor erfasst eine flächige 3D Punktewolke. Die nacheinander aufgenommen Punktewolken ergeben dann die 3D-Koordinaten des Messobjektes. Der 3D-Flächenscanner kann beispielsweise mit Streifenprojektion und Triangulation arbeiten.
3. Stereokamera-Sensor mit wiederholungsarmer Musterprojektion
   Hier wird ein wiederholungsarmes Muster auf das Messobjekt projiziert und die 3D-Koordinaten des Messobjektes durch Korrelation zweier Bilder ermittelt.

Der optische Sensor kann handgeführt, durch einen Roboter bewegt oder stationär an der KMG befestigt werden, wobei bei der stationären Befestigung auch mehrere Scanner verwendet werden können.

Der Sensor wird so eingestellt, dass nur helle oder dunkle Bereich der Oberfläche erfasst werden. Insbesondere wird die Belichtungszeit und/oder Blende und/oder Empfindlichkeit der Kamera so gewählt, dass jeweils nur helle oder dunkle Bereiche der Oberfläche aufgenommen werden. Damit erhält man eine Punktewolke der Oberfläche, welche durch Ihre ortsabhängige Punktedichte ein virtuelles Zufallsmuster im KMG Koordinatensystem darstellt.

Durch die wiederholungsarme Oberfläche bzw. die hell/dunkel-Bereiche des wiederholungsarmen Musters können einzelne Messungen des 3D-Digitalisiersystems relativ zu dem Koordinatensystem der KMG referenziert. Die Referenzierung der Messungen des 3D-Digitalisiersystems kann durch bekannte Verfahren wie z.B. digitale Bildkorrelation, welche auf einem Texturmatching oder einer Zuordnung der jeweiligen Schwerpunkte der Bereiche unterschiedlicher Helligkeit und/oder Farbe, insbesondere der hellen oder dunklen Bereiche zueinander beruht, erfolgen.

Zusätzlich können Referenzobjekte wie Kugeln und/oder Pyramiden eingesetzt werden, oder aufgeklebte Referenzpunkte. Nach einem initialen Einmessen dieser Referenzobjekte oder Referenzpunkte im Koordinatensystem der KMG könnten diese dann zusätzlich zu dem Muster der Basisplatte dazu genutzt werden, um bei der Vorerfassung des Objektes die 3D-Aufnahmen gegenüber dem KMG Koordinatensystem zu referenzieren. Alternativ oder zusätzlich kann bei bekannter Relativposition von Muster und Referenzobjekten oder Referenzpunkten das initiale Einmessen dieser Referenzobjekte oder Referenzpunkte durch einen taktilen Sensor der KMG zur Bestimmung der Position des Musters der Basisplatte im Koordinatensystem der KMG dienen.

Werden ein oder mehrere stationäre 3D Digitalisiersysteme eingesetzt, können diese auch nur einmalig zum Koordinatensystem der KMG referenziert werden.

Bei beweglichen, insbesondere handführten Systemen erfolgt die Referenzierung immer erneut, da diese Sensorposition nicht bekannt ist.

Ist das 3D-Digitalisiersystem fest an der KMG angeordnet, kann dieses durch eine entsprechende Rückmeldung auch als Positionierhilfe für das Messobjekt genutzt werden. Insbesondere kann die Position des Messobjektes während des Einbringens des Messobjektes in das KMG laufend über den 3D-Sensor überwacht und eine Anzeige erfolgen, in welche Richtung das Messobjekt bewegt werden soll, um dieses optimal zu positionieren, bzw. eine Rückmeldung erfolgen, sobald das Messobjekt optimal positioniert ist.

Sind über das 3D-Messsystem auch Textur und/oder Farbinformation zum Messobjekt ermittelbar, können diese gegebenenfalls mit den durch das taktile Messsystem ermittelten Daten fusioniert werden, oder anderweitig zur Dokumentation herangezogen werden.

Auch unabhängig von Texturinformationen ist es denkbar, durch das 3D-Messsytem erhaltene 3D Information mit der über das taktile Messgerät erhaltenen Information zu fusionieren.

Der Einsatz eines wiederholungsarmen Musters als Referenzmuster erlaubt es zudem, Einzelaufnahmen eines Messobjektes einfacher miteinander zu matchen, indem das jeweils erfasste Muster mit dem bekannten Referenzmuster gematcht wird. Hierdurch wird kein Überlapp zwischen den erfassten Referenzmustern in den Einzelbildern benötigt.

Weiterhin kann das Messobjekt auch gegenüber dem Hintergrundmuster bewegt werden, solange das Messobjekt und das Hintergrundmuster gemeinsam optisch erfasst werden.

Weiterhin können nicht nur Messvorgänge, sondern auch Motion-Tacking-Vorgänge markerlos abgebildet werden, wie sie z.B. für Augmented-Reality-Anwendungen benötigt werden.

## Patentansprüche

1. Verfahren zur 3D-Erfassung eines Messobjekts mittels eines optischen Sensors, bei welchem das Messobjekt durch den optischen Sensor erfasst wird, um 3D-Messdaten zu dem Messobjekt in einem Sensorkoordinatensystem zu erzeugen,
**dadurch gekennzeichnet,**
**dass** zur Referenzierung zwischen dem Sensorkoordinatensystem und einem Raumkoordinatensystem ein wiederholungsarmes Hintergrundmuster eingesetzt wird.

2. Verfahren nach Anspruch 1, wobei die Referenzierung durch Auswertung des wiederholungsarmen Hintergrundmusters mittels digitaler Bildkorrelation erfolgt, wofür bevorzugt in zwei Aufnahmen mehrere gleiche Bildbereiche identifiziert und miteinander in Beziehung gesetzt werden.

3. Verfahren nach Anspruch 1 oder 2, wobei der optische Sensor während der 3D-Erfassung des Messobjekts ortsfest zum Messobjekt angeordnet ist und/oder das wiederholungsarme Hintergrundmuster für eine initiale Referenzierung zwischen dem Sensorkoordinatensystem und dem Raumkoordinatensystem herangezogen wird.

4. Verfahren nach einem der vorangegangenen Ansprüche, wobei der optische Sensor während der 3D-Erfassug des Messobjekts relativ zu dem Messobjekt bewegt wird, und/oder wobei das wiederholungsarme Hintergrundmuster zusammen mit dem Messobjekt aufgenommen wird, um für die jeweilige Aufnahme eine Referenzierung zwischen dem Sensorkoordinatensystem und dem Raumkoordinatensystem vorzunehmen.

5. Verfahren nach einem der vorangegangenen Ansprüche, wobei es sich bei dem wiederholungsarmen Hintergrundmuster um das Muster einer Basisplatte handelt, auf welcher das Messobjekt zur Durchführung der Messung platziert wird.

6. Verfahren nach einem der vorangegangenen Ansprüche, wobei es sich bei dem wiederholungsarmen Hintergrundmuster um die natürliche Musterung eines Objektes aus Stein, insbesondere einer Steinplatte, insbesondere einer Natur- und/oder Kunststeinplatte handelt, und/oder um eine Musterung eines aus unterschiedlich gefärbten Kunststoffen gefertigten Objektes.

7. Verfahren nach einem der vorangegangenen Ansprüche, wobei das wiederholungsarme Hintergrundmuster vor der Durchführung der 3D-Erfassung bezüglich seiner Lage im Raumkoordinatensystem eingemessen wird, und/oder wobei die 3D-Erfassung des Messobjektes genutzt wird, um einen darauffolgenden Messprozess anzusteuern, insbesondere um den Messkopf eines Koordinatenmessgeräts anzusteuern.

8. Verfahren zur 3D-Erfassung eines Messobjekts mittels eines Koordinatenmessgerätes, insbesondere nach einem der vorangegangenen Ansprüche, wobei das Koordinatenmessgerät einen Messkopf aufweist, welcher in einem Messbereich des Koordinatenmessgeräts verfahrbar ist, um ein Messobjekt zu erfassen,
wobei ein Messobjekt vor der Erfassung durch den Messkopf in dem Messbereich des Koordinatenmessgerätes angeordnet und die 3D-Daten des Messobjekts über einen optischen Sensor erfasst werden, um die Position des Messobjektes relativ zu dem Koordinatensystem des Koordinatenmessgerätes zu ermitteln,
**dadurch gekennzeichnet,**
**dass** der optische Sensor relativ zu dem Messobjekt bewegt wird, um mehrere Aufnahmen des Messobjektes aus unterschiedlichen Positionen aufzunehmen.

9. Verfahren nach einem der vorangegangenen Ansprüche, wobei es sich bei dem optischen Sensor um einen handgeführten Sensor oder einen durch einen Roboter geführten Sensor handelt und/oder wobei der optische Sensor mindestens einen Projektor und mindestens eine Kamera umfasst.

10. Verfahren nach Anspruch 8 oder 9, wobei ein an dem Koordinatenmessgerät angeordnetes Referenzmuster und/oder an dem Koordinatenmessgerät angeordnete Referenzobjekte zusammen mit dem Messobjekt aufgenommen werden, um für die jeweilige Aufnahme eine Referenzierung zwischen dem Sensorkoordinatensystem und dem Koordinatensystem des Koordinatenmessgerätes vorzunehmen, wobei bevorzugt ein Muster einer Basisplatte des Koordinatenmessgerätes als Referenzmuster eingesetzt wird.

11. Verfahren nach einem der Ansprüche 7 bis 10, wobei das Koordinatenmessgerät einen Messkopf aufweist, welcher im Messbereich des Koordinatenmessgeräts verfahrbar ist, um das Messobjekt zu erfassen, wobei der Messkopf bevorzugt mit einem zweiten optischen Sensor augestattet oder ausstattbar ist, wobei der zweite optische Sensor genutzt wird, um ein am Koordinatenmessgerät angeordnetes Referenzmuster bezüglich seiner Lage im Koordinatensystem des Koordinatenmessgerätes einzumessen.

12. Messgerät insbesondere zur Durchführung eines Verfahrens nach einem der vorangegangenen Ansprüche, mit
einem optischen Sensor zur 3D-Erfassung eines Messobjekts,
einem wiederholungsarmen Hintergrundmuster und mit
einer Auswerteeinheit, welche das wiederholungsarme Hintergrundmuster zur Referenzierung zwischen einem Sensorkoordinatensystem und einem Raumkoordinatensystem nutzt.

13. Messgerät nach Anspruch 12, wobei es sich bei dem wiederholungsarmen Hintergrundmuster um das Muster einer Basisplatte handelt, auf welcher das Messobjekt zur Durchführung der Messung platziert wird, und/oder wobei es sich bei dem wiederholungsarmen Hintergrundmuster um die natürliche Musterung einer Steinplatte, insbesondere einer Natur- und/oder Kunststeinsteinplatte handelt, und/oder um eine Musterung einer aus unterschiedlich gefärbten Kunststoffen gefertigten Platte.

14. Messgerät, insbesondere Koordinatenmessgerät, insbesondere zur Durchführung eines Verfahrens nach einem der vorangegangenen Ansprüche,
wobei das Messgerät einen Messkopf aufweist, welcher in einem Messbereich des Messgeräts verfahrbar ist, um ein Messobjekt zu erfassen,
wobei das Messgerät weiterhin einen optischen Sensor und eine Auswerteeinheit aufweist, durch welche die 3D-Daten eines in dem Messbereich des Messgerätes angeordneten Messobjekts vor der Erfassung durch den Messkopf erfasst werden können, um die Position des Messobjektes relativ zu dem Koordinatensystem des Messgerätes zu ermitteln,
**dadurch gekennzeichnet,**
**dass** der optische Sensor relativ zu dem Messobjekt bewegbar ist, um mehrere Aufnahmen des Messobjektes aus unterschiedlichen Positionen aufzunehmen.

15. Messgerät nach einem der Ansprüche 12 bis 14, wobei es sich bei dem optischen Sensor um einen handgeführten oder einen durch einen Roboterarm geführten Sensor handelt und/oder wobei der optische Sensor mindestens einen Projektor und mindestens eine Kamera umfasst.
